# EUROPEAN PATENT SPECIFICATION

(11) **EP 1 128 645 B1**
(45) Date of publication and mention of the grant of the patent: **01.02.2006**
(21) Application number: 01301604.3
(22) Date of filing: 22.02.2001
(51) Int. Cl.: H04M 1/725

(54) **Intelligent incoming call management during cordless intercom mode**
Intelligente Verarbeitung eines eingehendes Anrufs in einem schnurlosen Gegensprechsystem
Traitement intelligent d'appel entrant dans un mode d'interphonie sans fil

(30) Priority: 23.02.2000 US 511701
(43) Date of publication of application: 29.08.2001
(73) Proprietor: Agere Systems Guardian Corporation, Orlando, Florida 32819 (US)
(72) Inventor: Cannon, Joseph M., Harleysville, Pennsylvania 19438 (US); Johanson, James A., Macungie, Pennsylvania 18062 (US)
(74) Representative: Williams, David John

(56) References cited:
- WO-A-99/31865
- US-A- 4 640 987
- US-A- 4 650 931
- US-A- 5 297 203
- US-A- 5 752 195

## Description

### Field of the Invention:

The invention is directed to the field of telephony, and in particular to cordless telephones that include an intercom between the base unit and the handset.

### Background of the Invention:

Cordless telephones include a base unit, which is typically in a relatively "fixed" location, and a handset, which may be cradled in the base unit, such as when charging a battery, or which may roam relative to the base unit, such as when engaged in a telephone call. The base unit is typically coupled to a network, such as the Public Switched Telephone Network (PSTN), via a physical connection. The base unit is also coupled, via an RF connection, to the handset. Thus, when a user is engaged in a telephone call, the user interacts with a microphone and a speaker in the handset, associated RF signals are transmitted between the handset and the base unit, and the base unit interfaces with the network.

Some conventional cordless telephones take advantage of the RF link between the base unit and the handset by enabling an intercom mode. In this mode, for example, a user who is at a location remote from the base unit may use the intercom mode to communicate with another user located near the base unit. The particular methods of establishing the intercom vary amongst the conventional cordless telephones.

For example, some conventional telephones allow the user with the handset to initiate an intercom mode connection by activating a key on a keypad of the handset, thereby causing a signal to be transmitted over the RF link to the base unit. This signal may automatically initiate the intercom mode. Alternatively, the intercom mode may begin when the other user at The base unit responds to an alert, such as an audible signal, by activating a key on the base unit. Alternative, cordless telephone configurations enable a user to initiate an intercom mode from the base unit, such as during a paging operation. Of course, some cordless telephones enable the intercom mode to be initiated from either the base unit or the handset.

Regardless of the initiation method, one consistent prerequisite to the intercom mode is that the cordless telephone must be in an on-hook condition (i.e., there is not an on-going telephone call) prior to the initiation of the intercom mode. This requirement is mandated by the fact that there is only one RF link between the base unit and the handset, and that if the link is employed in an on-going telephone conversation, then it cannot be employed for intercom purposes.

Another conventional feature mandated by the existence of a single link is that an on-going intercom conversation cannot be maintained in the presence of a new incoming call. Conventionally, therefore, when a new call is incoming, the cordless telephone terminates the intercom mode prior to causing a ringing signal to be produced by the base unit and/or the handset. This can be inconvenient in that it may abruptly terminate an on-going discussion of import. This inconvenience may be especially pronounced if the incoming call is of litle or no import, such as a telemarketing solicitation. There is therefore a need for a more intelligent way of handling an incoming call in a cordless telephone engaged in an intercom mode.

WO 99/31865A discloses a method and apparatus for responding to an incoming call on one of a plurality of external telephone lines when a conference call is in progress on that external telephone line.

US4650931 and US4640987 disclose a cordless telephone having a base unit and a separate unit operable in intercome mode.

### Summary of the Invention:

In accordance with the invention there is provided a cordless telephone according to claim 1. Further in accordance with the invention there is provided a method according to claim 11.

This need is met, in one embodiment according to the invention, by a cordless telephone comprising a base unit and a handset, wherein an RF link between the base unit and the handset is adapted for use during a telephone conversation and for use as an intercom, and wherein, when in an intercom mode, an incoming call is handled in a manner that does not automatically terminate the intercom mode in response to the incoming call For example, call related information associated with the incoming call may be analyzed, and a decision to terminate the intercom mode may be based on the call related information.

In an alternative example, call related information may be transmitted by the base unit to the handset, and the handset may be adapted to display at least a portion of the call related information, so that a user may elect whether to respond to the incoming call or to maintain the intercom.

In another alternative embodiment according to the invention, a method of handling an incoming call in a cordless telephone that is in an intercom mode includes the steps of analyzing call related information associated with the incoming caII, and deciding whether to terminals the intercom mode based on the call related information.

### Bief Description of the Drawing:

Objects and advantages of the invention will be apparent to one of skill in the art upon review of the following detailed description in light of the drawing, wherein:
Figure 1 is a simplified block diagram of one embodiment of a cordless telephone according to the invention;
Figure 2 is a simplified operational flowchart of one embodiment according to the invention; and
Figure 3 is a simplified operational flowchart of another embodiment according to the invention

### Detailed Description:

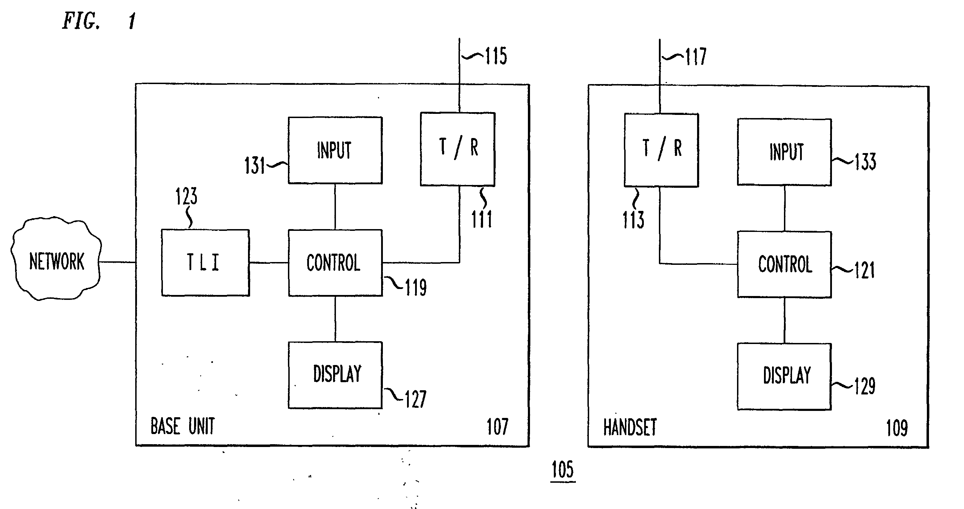

Figure 1 is a simplified block diagram of a cordless telephone adapted to operate according to the invention. Telephone 105 comprises two primary components: a base unit 107 and a handset 109. A link, such as an RF link, is established between the base unit 105 and handset 107 by way of a transceiver 111 in base unit 107 and a transceiver 113 in handset 109. The transceivers 111 and 113 are respectively coupled to antennas 115 and 117, and are respectively controlled by controllers 119 and 121.

Controllers 119 and 121 may be integrated circuit based devices, such as microcontrollers or digital signal processors (DSPs). For example, the controllers may be in the DSP 16XX family available from Lucent Technologies, Inc. Controllers 119 and 121 are programmed to control the operations of the base unit 107 and handset 109 according to the invention. For example, controllers 119 and 121 may be programmed to allow for an intercom mode wherein an RF link exists between the base unit 107 and the handset 109. When in the intercom mode, two users communicate between the base unit 107 and handset 109 by speaking into microphones (not shown) and listening to speakers (not shown) integrated therein.

When a user speaks into a microphone in one of the base unit 107 and handset 109, the microphone converts the sounds incident thereon into electrical signals. These electrical signals may be conditioned and/or converted, such as by conversion into digital form via an analog-to-digital converter portion of a codec, and then transmitted over the RF link to the other of the base unit 107 and handset 109. At the receiving end, the signals are recovered and output from the speaker.

Conventionally, such an intercom conversation is immediately terminated upon the receipt of an incoming call. For example, base unit 107 may include a telephone line interface (TLI) 123 that links the base unit 107 to a network 125, such as a public switched telephone network (PSTN) and in a conventional cordless telephone, an incoming call from the PSTN will terminate the intercom conversation. However, according to the invention, the intercom conversation is not immediately terminated upon the receipt of the incoming call. In one exemplary embodiment, the intercom conversation is maintained, and data associated with the incoming call is provided to at least one of the parties to the intercom conversation. A party to the intercom conversation may elect, based on the data, to cause the intercom conversation to be terminated in favor of the incoming call. Alternatively, the party may elect to maintain the intercom conversation and ignore the incoming call. According to this option, the ignored incoming caller may be forwarded to a voicemail system, such as a central office based voicemail system.

This exemplary embodiment thus treats the incoming caller in the same way as an incoming caller is treated in a Type II Caller ID scenario, also known as Caller ID with Call Waiting (CID/CW). In CID/CW, while a first party is engaged in a telephone conversation with a second party, and a third party incoming caller is attempting to reach the first party, the first party is alerted to the incoming call by a series of "tones", also known as Subscriber Alert Signals (part of conventional Call Waiting), and is provided with Caller ID data associated with the incoming caller, such as on a display in the first party's handset. If the first party desires to speak with the incoming caller (third party), the first party can temporarily place the second party on hold by activating a "switchhook" device. Further, the first party can toggle back and forth between the second and third parties by repetitively activating the switchhook.

According to the invention, therefore, the base unit 107 and handset 109 are configured, primarily by way of particular programming of controllers 119 and 121, to emulate a CID/CW situation when the baseline situation is that there is no telephone call between a first party's telephone and a second party's telephone, but where instead there is an intercom conversation between the base unit 107 and the handset 109.

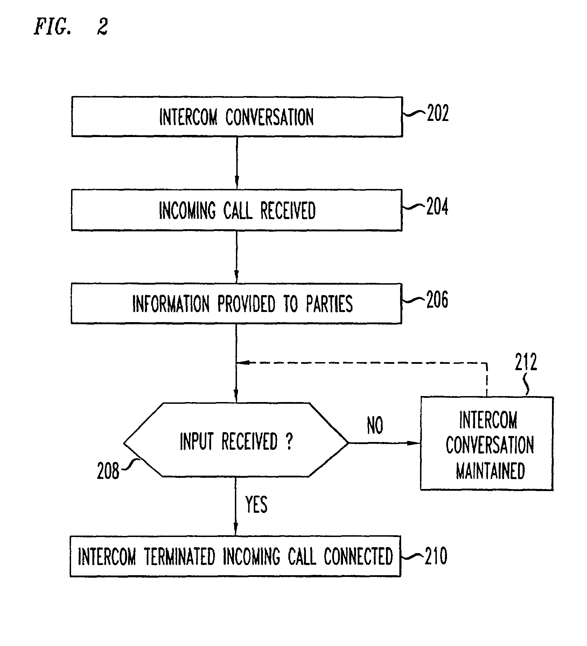

Figure 2 provides an operational flowchart according to the invention. At step 202, an intercom conversation is on-going. At step 204, an incoming call is received. For example, a signal is received in base unit 107 from the network 125. This signal is received by TLI 123 and information contained in the signal is processed by controller 119. At step 206, call related information associated with the incoming call, such as Caller ID data, is made available to at least one of the parties to the intercom conversation. For example, the controller 119 may cause the information to be displayed at the location of the base unit, such as on a display element 127. Alternatively, or additionally, the controller 119 may cause a signal to be transmitted over the RF link from the base unit 107 to the handset 109 informing the controller 121 of the information, which may thus be displayed on display 129.

At step 208, a determination is made as to whether user input is received, such as via a user input unit 131 of base unit 107 or user input unit 133 of handset 109, to cause the termination of the intercom conversation in favor of receipt of the incoming call. If so, at step 210 the intercom conversation is terminated and the incoming call is connected. If, on the other hand, the determination at step 208 is that there is no such input, then the intercom conversation is maintained at step 212. The process may continue at step 208 by looking for user input until the incoming call is terminated by the incoming caller, until the intercom conversation is terminated, and/or until a certain period of time expires.

As part of an exemplary implementation of step 206, for the embodiment wherein the information is transmitted between the base unit and the handset, the RF link may be attenuated to facilitate the transfer of the information and/or to make the information transfer less perceptible by the parties. For example, transducers associated with the handset 109 and/or the base unit 107 may be muted or attenuated in a way that reduces or eliminates any cross effects between the audio signals of the intercom conversation and the data transfer. In one example, a microphone and speaker of the handset 109 are muted prior to the transmission of the call related information. This may be accomplished, for example, in response to a signal that alerts the handset of the upcoming data transfer. The alerting signal may be an audible signal that also alerts the party at the handset to the incoming call and/or to the presence of call related information. The handset 109 may also provide an acknowledge signal to the base unit 107 to inform the base unit 107 that the handset 109 is prepared to receive the call related information.

As part of an exemplary implementation of step 208, the input may be received from a user associated with the handset 109, and information associated with this input may be transmitted, such as via the RF link, from the handset 109 to the base unit 107. The base unit 107 may thus operate, based on the input, to maintain the intercom conversation or to connect the incoming call via the TLI 123 and the network 125.

In an alternative embodiment, the call related information may be analyzed automatically by one or more of the processors 119, 121. For example, processor 119 may be adapted to evaluate the call related information, such as Caller ID data, and make a determination as to whether to accept the incoming call based on the analysis. For example, a table may be stored in a memory associated with controller 119 or incorporated into controller 119, and the table may include a list of the call related information that, if associated with an incoming call, should result in termination of the intercom conversation and acceptance of the incoming call. Alternatively, the table may include data associated with calls that should not be accepted in place of the intercom conversation.

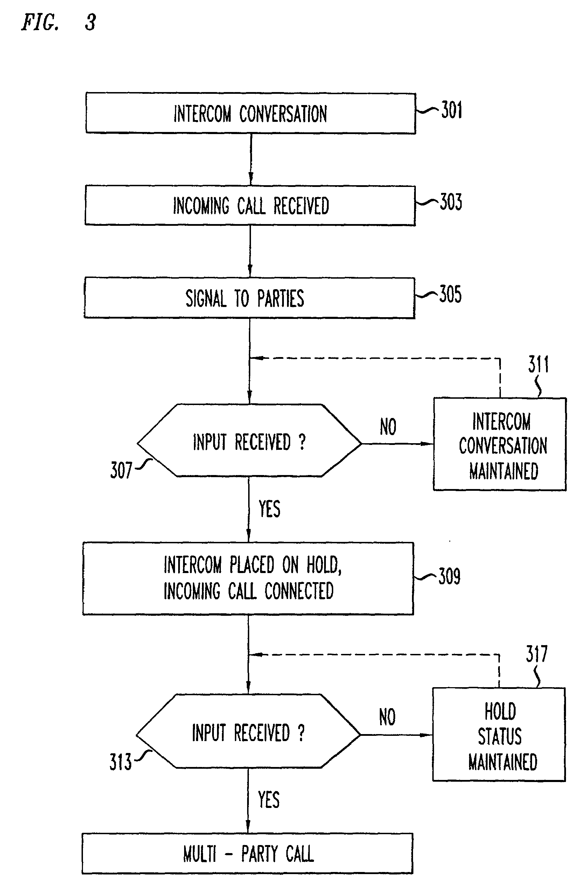

In another alternative embodiment according to the invention, an incoming call may be answered and the intercom conversation may be maintained in a way that emulates conventional call waiting functionality. This is shown, for example, in Figure 3, where an intercom conversation is on-going at step 301, and an incoming call is received at step 303. Instead of immediately terminating the intercom conversation in response to the incoming call, as would be conventional, according to this embodiment, some form of signal, such as, for example, a signal comparable to the SAS signal, is provided to at least one of the parties to the intercom conversation at step 305.

At step 307, a determination is made as to whether an input, such as an activation of a particular button on a keypad or activation of a switchhook is received from a user. If so, then the intercom conversation is placed on hold and the incoming call is connected, at step 309. If, on the other hand, there is no input, then the intercom conversation is maintained and the incoming call is ignored, at least until the input is provided, at step 311.

If the incoming call is connected at step 309, then the process advances to step 313, where additional input, such as the additional activation of a key or switchhook, is evaluated. If such an input is received, then the party to the intercom conversation is added in to the call, such that a multi-party conversation occurs, at step 315. If, on the other hand, such input is not received, then the intercom conversation may remain in the hold status, at least until the input is received, or until the incoming call is terminated, at step 317.

The signal provided to the parties at step 305 may be as simple as a SAS tone, as discussed above, or may include Caller ID data or other call related data, such as contained within the embodiment of the invention described with respect to Figure 2. Further, the signaling, muting, and other alternative features of that embodiment may be incorporate in to the embodiment of Figure 3, for example, as part of the signaling step 305.

Based on an understanding of these various embodiments, one of skill in the art is likely to conceive of alternative embodiments that are not specifically enumerated here, but that are clearly within the scope of the invention.

## Claims

1. A cordless telephone (105), comprising:
a base unit (107); and
a handset (109);
wherein an RF link between said base unit (107) and said handset (109) is adapted for use during a telephone conversation and for use as an intercom; and
wherein, when in an intercom mode, call related information analysed automatically by a processor is presented to at least one of said base unit (107) and said handset (109) to allow selective connection of an incoming call simultaneously at at least one of said base unit (107) and said handset (109) said intercom mode being maintained between said base unit (107) and said handset (109) while said incoming call is added as a third party to said intercom mode.

2. A cordless telephone (105) as recited in claim 1, wherein the call related information comprises Caller ID data.

3. A cordless telephone (105) as recited in claim 1, wherein said selective connection is performed by a processor in at least one of said base unit (107) and said handset (109).

4. A cordless telephone (105) as recited in claim 1, wherein said call related information is transmitted by said base unit (107) to said handset (109).

5. A cordless telephone (105) as recited in claim 4, wherein audio is attenuated prior to said transmission of said call related information.

6. A cordless telephone (105) as recited in claim 4, wherein a signal is transmitted from said base unit (107) to said handset (109) prior to said transmission of said call related information

7. A cordless telephone (105) as recited in claim 6, wherein an acknowledge signal is transmitted from said handset (109) to said base unit (107) prior to said transmission of said call related information.

8. A cordless telephone (105) as recited in claim 5, wherein said handset (109) is adapted to display at least a portion of said call related information.

9. A cordless telephone (105) as recited in claim 8, wherein said handset (109) is adapted to receive user input and to provide a signal related to said user input to said base unit (107).

10. A cordless telephone (105) as recited in claim 9, wherein said base unit (107) is adapted to affect said intercom mode based on said signal related to said user input.

11. A method of handling an incoming call in a cordless telephone (105), comprising:
establishing an intercom mode between a base unit (107) and a handset (109) of a cordless telephone (105); and
selectively maintaining said intercom mode between said base unit (107) and said handset (109) based on incoming call related information analysed automatically by a processor while an incoming call is added as a third party to said intercom mode with two-way communication with both said base unit (107) and said handset (109).

## Patentansprüche

1. Schnurloses Telefon (105), umfassend:
eine Basiseinheit (107); und
einen Handapparat (109);
wobei eine HF-Verbindung zwischen der Basiseinheit (107) und dem Handapparat (109) ausgebildet ist zur Verwendung während eines Telefongesprächs und zur Verwendung als Gegensprechanlage; und
wobei im Gegensprechbetrieb auf einen Anruf bezogene Information, die automatisch von einem Prozessor analysiert wird, der Basiseinheit (107) und/oder dem Handapparat (107) angeboten wird, um eine selektive Durchschaltung eines ankommenden Anrufs an der Basiseinheit (107) und/oder dem Handapparat (109) zu ermöglichen, wobei der Gegensprechanlagen-Modus zwischen der Basiseinheit (107) und dem Handapparat (109) aufrechterhalten bleibt, während der ankommende Anruf als dritter Teilnehmer zu dem Gegensprechbetrieb hinzugefügt wird.

2. Schnurloses Telefon (105) nach Anspruch 1, bei dem auf den Anruf bezogene Information Anrufer-Kennungsdaten (ID-Daten) enthält.

3. Schnurloses Telefon (105) nach Anspruch 1, bei dem das selektive Durchschalten von einem Prozessor in der Basiseinheit und/oder dem Handapparat (109) vorgenommen wird.

4. Schnurloses Telefon (105) nach Anspruch 1, bei dem die auf den Anruf bezogene Information von der Basiseinheit (107) an den Handapparat (109) ermittelt wird.

5. Schnurloses Telefon (105) nach Anspruch 4, bei dem vor der Übertragung der auf den Anruf bezogenen Information das Audiosignal gedämpft wird.

6. Schnurloses Telefon (105) nach Anspruch 4, bei dem ein Signal von der Basiseinheit (107) zu dem Handapparat (109) vor der Übertragung der auf den Anruf bezogenen Information gesendet wird.

7. Schnurloses Telefon (105) nach Anspruch 6, bei dem ein Quittungssignal von dem Handapparat (109) an die Basiseinheit (107) gesendet wird, bevor die Übertragung der auf den Anruf bezogenen Information stattfindet.

8. Schnurloses Telefon (105) nach Anspruch 5, bei dem der Handapparat (109) dazu ausgebildet ist, zumindest einen Teil der auf den Anruf bezogenen Information anzuzeigen.

9. Schnurloses Telefon (105) nach Anspruch 8, bei dem der Handapparat (109) dazu ausgebildet, eine benutzerseitige Eingabe zu empfangen und ein auf die Benutzereingabe bezogenes Signal an die Basiseinheit (107) zu geben.

10. Schnurloses Telefon (105) nach Anspruch 9, bei dem die Basiseinheit (107) dazu ausgebildet ist, den Gegensprechbetrieb basierend auf dem zu der Benutzereingabe bezogenen Signal zu beeinflussen.

11. Verfahren zum Abwickeln eines in einem schnurlosen Telefon (105) ankommenden Anrufs, umfassend:
Einrichten eines Gegensprechbetriebs zwischen einer Basiseinheit (107) und einem Handapparat (109) eines schnurlosen Telefons (105); und
selektives Beibehalten des Gegensprechbetriebs zwischen der Basiseinheit (107) und dem Handapparat (109) basierend auf automatisch von einem Prozessor analysierten, auf den ankommenden Anruf bezogener Information, während ein ankommender Anruf als dritter Teilnehmer zu dem Gegensprechbetrieb mittels einer Zweiwegeverbindung mit sowohl der Basiseinheit (107) als auch dem Handapparat (109) hinzugefügt wird.

## Revendications

1. Téléphone sans fil (105), comprenant :
un module de base (107) ; et
un combiné (109) ;
dans lequel une liaison RF (radiofréquence) entre ledit module de base (107) et ledit combiné (109) est apte à être utilisée pendant une conversation téléphonique et à être utilisée en tant que liaison d'interphonie ; et
dans lequel, dans un mode d'interphonie, des informations liées à l'appel analysées automatiquement par un processeur sont présentées à au moins l'un dudit module de base (107) et dudit combiné (109) pour permettre une connexion sélective simultanée d'un appel entrant sur au moins l'un dudit module de base (107) et dudit combiné (109), ledit mode d'interphonie étant maintenu entre ledit module de base (107) et ledit combiné (109) pendant que ledit appel entrant est ajouté en tant que troisième participant audit mode d'interphonie.

2. Téléphone sans fil (105) selon la revendication 1, dans lequel lesdites informations liées à l'appel comprennent des données d'Identification d'Appelant.

3. Téléphone sans fil (105) selon la revendication 1, dans lequel ladite connexion sélective est effectuée par un processeur dans au moins l'un dudit module de base (107) et dudit combiné (109).

4. Téléphone sans fil (105) selon la revendication 1, dans lequel lesdites informations liées à l'appel sont transmises par ledit module de base (107) audit combiné (109).

5. Téléphone sans fil (105) selon la revendication 4, dans lequel le signal audio est atténué avant ladite transmission desdites informations liées à l'appel.

6. Téléphone sans fil (105) selon la revendication 4, dans lequel un signal est transmis dudit module de base (107) audit combiné (109) avant ladite transmission desdites informations liées à l'appel.

7. Téléphone sans fil (105) selon la revendication 6, dans lequel un signal d'accusé de réception est transmis dudit combiné (109) audit module de base (107) avant ladite transmission desdites informations liées à l'appel.

8. Téléphone sans fil (105) selon la revendication 5, dans lequel ledit combiné (109) est conçu pour afficher au moins une partie desdites informations liées à l'appel.

9. Téléphone sans fil (105) selon la revendication 8, dans lequel ledit combiné (109) est conçu pour recevoir une entrée de l'utilisateur et pour fournir un signal lié à ladite entrée de l'utilisateur audit module de base (107).

10. Téléphone sans fil (105) selon la revendication 9, dans lequel ledit module de base (107) est conçu pour passer dans ledit mode d'interphonie sur la base dudit signal lié à ladite entrée de l'utilisateur.

11. Procédé de traitement d'un appel entrant dans un téléphone sans fil (105), comprenant :
l'établissement d'un mode d'interphonie entre un module de base (107) et un combiné (108) d'un téléphone sans fil (105) ; et
le maintien sélectif dudit mode d'interphonie entre ledit module de base (107) et ledit combiné (109) sur la base d'informations liées à l'appel analysées automatiquement par un processeur pendant qu'un appel entrant est ajouté en tant que troisième correspondant audit mode d'interphonie par une communication bidirectionnelle simultanée avec ledit module de base (107) et ledit combiné (109).
